# EUROPEAN PATENT APPLICATION

(11) **EP 4 818 902 A1**
(43) Date of publication of application: **07.10.2026**
(21) Application number: 25168712.5
(22) Date of filing: 04.04.2025
(51) Int. Cl.: G06F 9/50

(54) **MACHINE-LEARNING-BASED PREDICTION AND DYNAMIC CORE ALLOCATION ARCHITECTURE**

(71) Applicant: GOOGLE LLC, Mountain View CA 94043 (US)
(72) Inventor: HEIDARINEJAD, Mohsen, Mountain View, 94043 (US); MITTAL, Arpit, Mountain View, 94043 (US)
(74) Representative: Marks & Clerk GST

(57) **Abstract**

Techniques and apparatuses are described for implementing a machine-learning (ML) based prediction and dynamic core allocation architecture. **In** example aspects, a plurality of parameters related to one or more operating conditions (e.g., temperature of a core) of one or more processors are generated. The plurality of parameters are used as an input for an ML-based model, which outputs a prediction of future parameters. The prediction is used as input for one or more process modules. The one or more process modules parse the prediction to provide a decision output, which is used to modify one or more facets of the one or more processors (a frequency, a voltage, core assignments for tasks, etc.). **In** this way, a system-on-chip can dynamically manage multiple operations concems for the one or more processors, such as balancing performance and temperature concerns to realize a tailored user experience.

## Description

### BACKGROUND

Original equipment manufacturers (OEMs) of electronic devices using one or more processors, such as multi-core processors, face the challenge of dynamically balancing processor parameters, such as performance and temperature. Consider a user of a computing device using the computing device for video calling. The user may expect a certain level of performance, but, if the computing device allocates too many resources to the computing device, an experience of the user may be negatively affected. For example, the computing device can drain a battery too quickly or produce too much heat. Consider a second use case of the computing device, where the user plays a high-performance video game. In this situation, the user requires maximum performance at the expense of other parameters (e.g., battery life), but heat concems persist. A dynamic management including parameter prediction is needed to ensure a tailored user experience.

### SUMMARY

Techniques and apparatuses are described for implementing a machine-learning (ML) based prediction and dynamic core allocation architecture. In example aspects, a plurality of parameters related to one or more operating conditions (e.g., temperature of a core) of one or more processors are generated. The plurality of parameters are used as an input for an ML-based model, which outputs a prediction of future parameters. The prediction is used as input for one or more process modules. The one or more process modules parse the prediction to provide a decision output, which is used to modify one or more facets of the one or more processors (a frequency, a voltage, core assignments for tasks, etc.). In this way, a system-on-chip can dynamically manage multiple operations concems for the one or more processors, such as balancing performance and temperature concems to realize a tailored user experience.

Aspects described below include a method performed by a system-on-chip, the method including generating a plurality of parameters related to one or more operating conditions of one or more processors. The method further includes receiving one or more prediction outputs from a machine-leamed (ML) model. The ML model is configured to use an ML input, the ML input based on the plurality of parameters related to the one or more operating conditions of the one or more processors and the one or more prediction outputs based on the ML input. The ML model is trained on data related to the one or more operating conditions of the one or more processors. The method further includes generating, by one or more process modules and based on the one or more prediction outputs, a command for the one or more processors, the command configured to change one or more of the one or more operating conditions of the one or more processors.

Aspects described below also include a system-on-chip including one or more processors, one or more process modules, and a memory storing instructions that, when accessed by the one or more processors, cause the one or more processors to perform any one of the described methods.

Aspects described below also include a non-transitory, computer-readable medium that, when accessed by one or more processors, causes the one or more processors to perform any one of the described methods.

Aspects described below also include a computer programming product that, when accessed by one or more processors, causes the one or more processors to perform any one of the described methods.

### BRIEF DESCRIPTION OF THE DRAWINGS

Apparatuses and techniques for implementing an ML-based prediction and dynamic core allocation architecture are described with reference to the following drawings. The same numbers are used throughout the drawings to reference like features and components:
FIG. 1 illustrates an example environment in which an ML-based prediction and dynamic core allocation architecture can be implemented;
FIG. 2 illustrates an example implementation of a computing device that can implement aspects of an ML-based prediction and dynamic core allocation architecture;
FIG. 3 illustrates an example implementation of an ML-based prediction and dynamic core allocation architecture;
FIG. 4 illustrates example process modules for an ML-based prediction and dynamic core allocation architecture;
FIG. 5 illustrates an example implementation of an ML-based prediction and dynamic core allocation architecture;
FIG. 6 illustrates an example of machine-learning, as outlined in this disclosure;
FIG. 7 illustrates an example machine-learned architecture for an ML-based prediction and dynamic core allocation architecture;
FIG. 8 illustrates an example method for performing an ML-based prediction and dynamic core allocation architecture;
FIG. 9 illustrates another example method for an ML-based prediction and dynamic core allocation architecture;
FIG. 10 illustrates another example method for an ML-based prediction and dynamic core allocation architecture; and
FIG. 11 illustrates another example method for an ML-based prediction and dynamic core allocation architecture.

### DETAILED DESCRIPTION

An electronic device can be implemented with a system-on-chip (SoC), which can provide many features of the electronic device. An example system-on-chip can include one or more processors, such as a central processing unit (CPU), a graphics processing unit (GPU), a tensor processing unit (TPU), a neural processing unit (NPU), an associative processing unit (APU), a field-programmable gate array (FPGA), and/or a visual processing unit (VPU). Original equipment manufacturers (OEMs) of electronic devices using such SoCs, including those with multi-core processors, face the challenge of dynamically balancing processor parameters, such as performance and temperature. Consider a user of a computing device using the computing device for video calling. The user may expect a certain level of performance, but, if the computing device allocates too many resources to the computing device, an experience of the user may be negatively affected. For example, the computing device can drain a battery too quickly or produce too much heat. Consider a second use case of the computing device, where the user plays a high-performance video game. In this situation, the user requires maximum performance at the expense of other parameters (e.g., battery life), but heat concems persist. A dynamic management including parameter prediction is needed to ensure a tailored user experience.

In aspects, a plurality of parameters are based on one or more operating conditions of the one or more processors. The plurality of parameters are, in some examples, filtered by a filtration module to generate one or more filtered parameters. A machine-leamed (ML) model uses the plurality of parameters, the one or more filtered parameters, or both as an input. The ML model, in aspects, generates a prediction output. The prediction output, in aspects, predicts one or more parameters related to future operating conditions of the one or more processors. For example, the plurality of parameters can be a temperature of at least one core of the one or more processors. In this example, the prediction output can be a prediction of a future temperature of the at least one core.

The prediction output is used, in aspects, as an input for one or more process modules of the SoC. The one or more process modules can be, in some examples, hardware modules on the SoC. In other examples, the one or more modules can be in software, for example stored on a memory on the SoC. In some examples, the one or more modules are a hybrid of hardware modules and software modules.

The one or more modules, in aspects, process the prediction output and generate a command for the one or more processors. In an example where the prediction output is a future temperature of the at least one core, the modules can issue the command to the one or more processors such that the at least one core lowers an operating frequency (e.g., to lower the temperature of the at least one core). Example command types include processor and/or core frequency manipulation, processor and/or core voltage manipulation, task switching, workload adjustment, headroom threshold adjustment, etc.

### Operating Environment

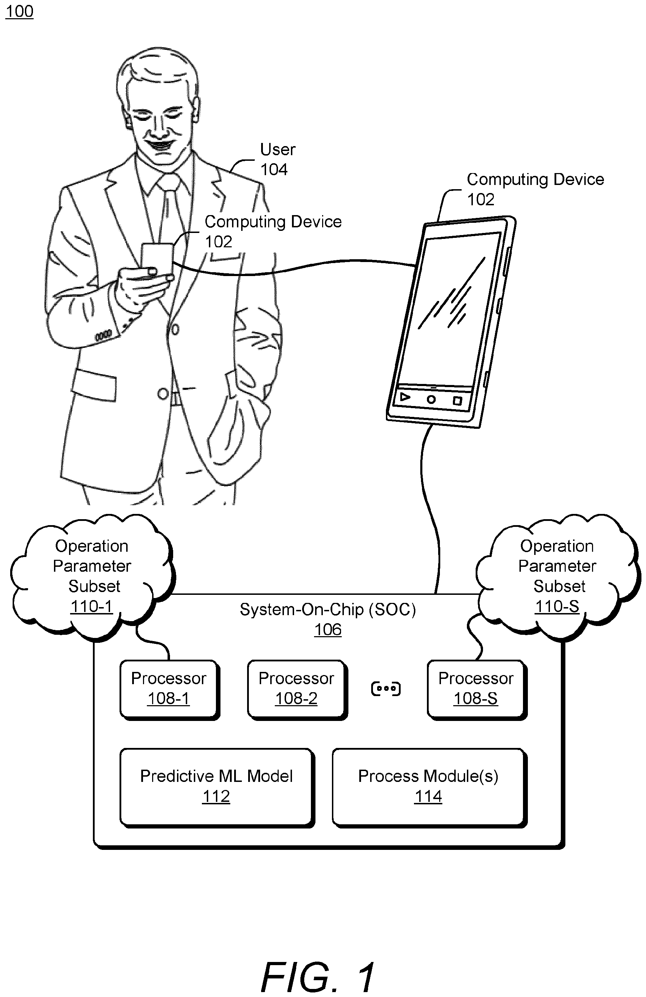

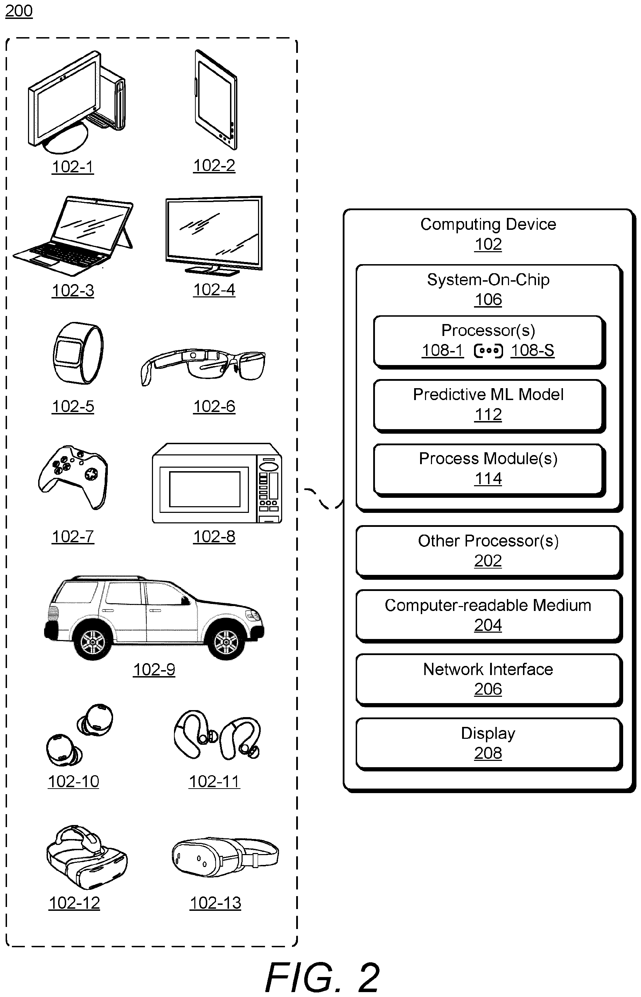

FIG. 1 illustrates an example environment 100 in which an ML-based prediction and dynamic core allocation architecture can be implemented. In the example environment 100, a computing device 102 provides features and/or services for a user 104. Although depicted as a smartphone, the computing device 102 can include other types of devices, including those described with respect to FIG. 2. The computing device 102 includes at least one system-on-chip (SOC) 106. The system-on-chip 106 can be implemented with electronic circuitry, a microprocessor, memory, input-output (I/O) control logic, communication interfaces, firmware, and/or software useful to provide functionalities of the computing device 102.

The system-on-chip 106 includes one or more processors 108-1, 108-2... 108-S, where S represents a positive integer. The one or more processors 108 can also be referred to as agents, modules, intellectual-property blocks (IP blocks), or intellectual-property cores. Examples of the one or more processors 108 can include a central processing unit (CPU), a graphics processing unit (GPU), a tensor processing unit (TPU), a neural processing unit (NPU), an associative processing unit (APU), a field-programmable gate array (FPGA), a visual processing unit (VPU), an image processing unit (IPU), a modem, a digital signal processor (DSP), an image processing unit (IPU), a power processing unit (PPU), and so forth.

The one or more processors 108 have one or more operation parameter subsets 110. For example, the processor 108-1 has operation parameter subset 110-1. Examples of operational parameters, in some examples, can include an operating frequency of one or more cores of the one or more processors 108, a power state of one or more of the cores of the one or more processors 108, a performance state of one or more of the cores of the one or more processors 108, a memory usage of one or more of the cores of the one or more processors 108, a scheduling time for one or more of the one or more processors 108, etc. The one or more operation parameter subsets 110 can affect a condition of the computing device 102, the SoC 106, or other related components.

For example, the one or more processors 108 can produce heat as one of the operation parameters of the one or more operation parameter subsets 110. The heat can contribute to increasing an internal temperature of the computing device 102. Left unchecked, the accumulation of heat within the computing device 102 can result in a high temperature that can damage the system-on-chip 106, can damage other components of the computing device 102, and/or can reduce a reliability of the computing device 102. In some cases, the high temperature can cause the computing device 102 to become unsafe for the user 104 to operate.

In another example, the one or more processors 108 can have a performance output as one of the operation parameters of the one or more operation parameter subsets 110. In an example where the user 104 is engaging with the computing device 102 in such a way that minimal performance is required (e.g., a low power state, using the computing device 102 as a music player), if the performance output is higher than required the user 104 may experience unwanted effects, such as a decreased battery life. In an example where the user 104 is engaging with the computing device 102 in such a way that high performance is required (e.g., active mapping, a video game), if the performance output is lower than required the user 104 may experience unwanted conditions, such as lag, skipped frames, etc.

To avoid these situations, the system-on-chip 106 includes a predictive ML model 112. From a high-level perspective, the predictive ML model 112 provides high-fidelity predictions of the operation parameter subsets 110 that are relevant to operation of the one or more processors 108 in such a way as to comport with an expected and/or desired experience for the user 104. The predictions from the predictive ML model 112 are used as inputs for one or more process modules 114. The one or more process modules 114 parse the predictions from the predictive ML model 112 into a control output for the one or more processors 108.

For example, consider a condition of the computing device 102 where the user 104 requires a high performance (e.g., playing a video game). In such an example, the condition requires high performance in order for the user 104 to not have negative effects (e.g., dropped frames), but the SoC 106 must still be protected from damage due to overheating. Consider the operation parameter subset 110-1 including a heat and a performance of the processor 108-1 and the operation parameter subset 110-S including a heat and a performance of the processor 108-S. For example, the heat of the processor 108-1 can be increasing at a rapid rate and the performance of the processor 108-1 (e.g., measured as the frequency and/or the voltage of the processor 108-1) at a steady, high rate. Additionally, for example, the heat of the processor 108-S can be relatively steady and the performance of the processor 108-S can be at a lower rate than that of the processor 108-1.

In such an example, the predictive ML model 112 can predict that the processor 108-1 will continue to increase its heat output, whereas the processor 108-S will not. The prediction can be used by the one or more process modules 114 to send a first control output to the processor 108-1 effective to reduce the frequency of the processor 108-1 and a second signal to the processor 108-S effective to raise the frequency of the processor 108-S.

The components of the system-on-chip 106 (e.g., the one or more processors 108 and the one or more process modules 114) can alternatively be implemented within other types of integrated circuits or embedded systems, such as a microchip, an application-specific integrated circuit (ASIC), an application-specific standard product (ASSP), a digital signal processor (DSP), a programmable system-on-chip (PSoC), a system-in-package (SiP), a controller, and so forth. The computing device 102 is further described with respect to FIG. 2.

### Example Computing Device

FIG. 2 illustrates an example computing device 102. The computing device 102 is illustrated with various non-limiting example devices, including a desktop computer 102-1, a tablet 102-2, a laptop 102-3, a television 102-4, a computing watch 102-5, computing glasses 102-6, a gaming system 102-7, a computing appliance 102-8, a vehicle 102-9, earbuds 102-10 (e.g., true-wireless earbuds, wired earbuds), hearing aids 102-11, a virtual-reality (VR) headset 102-12, and an augmented-reality (AR) headset 102-13. Other devices may also be used, including a home service device, a smart speaker, a smart thermostat, a baby monitor, a Wi-Fi^{™} router, a drone, a trackpad, a drawing pad, a netbook, an e-reader, a home automation and control system, a wall display, or another home appliance. Note that the computing device 102 can be wearable, non-wearable but mobile, or relatively immobile (e.g., desktops and appliances). The computing device 102 includes at least one system-on-chip 106. The system-on-chip 106 includes the one or more processors 108-1 to 108-S, the predictive ML model 112, and the one or more process modules 114, as described in FIG. 1.

The computing device 102 also includes, in some examples, at least one other processor 202 and at least one computer-readable medium 204 (e.g., non-transitory computer-readable medium). The computer-readable medium 204 can include memory media and/or non-transitory storage media. An operating system (not shown) embodied as computer-readable instructions on the computer-readable medium 204 can be executed by the computer processor 202. In some examples, the predictive ML model 112, at least one of the one or more process modules 114, or both reside on the computer-readable medium 204.

The computer-readable medium 204 can include one or more applications. Execution of the application(s) can, in some examples, involve operating the one or more processors 108. Example applications can include a messaging application, an application that plays videos, a navigation application, or a gaming application. Different applications can have different performance requirements and cause the one or more processors 108 to operate with different workloads. For example, the messaging application can require less processing power from the one or more processors 108 than the gaming application. In some examples, different applications can use different numbers of the one or more processors 108. In general, each application can be associated with a particular thermal usage characteristic, which represents an amount of heat generated by the system-on-chip 106. This heat generation impacts an overall temperature of the computing device 102.

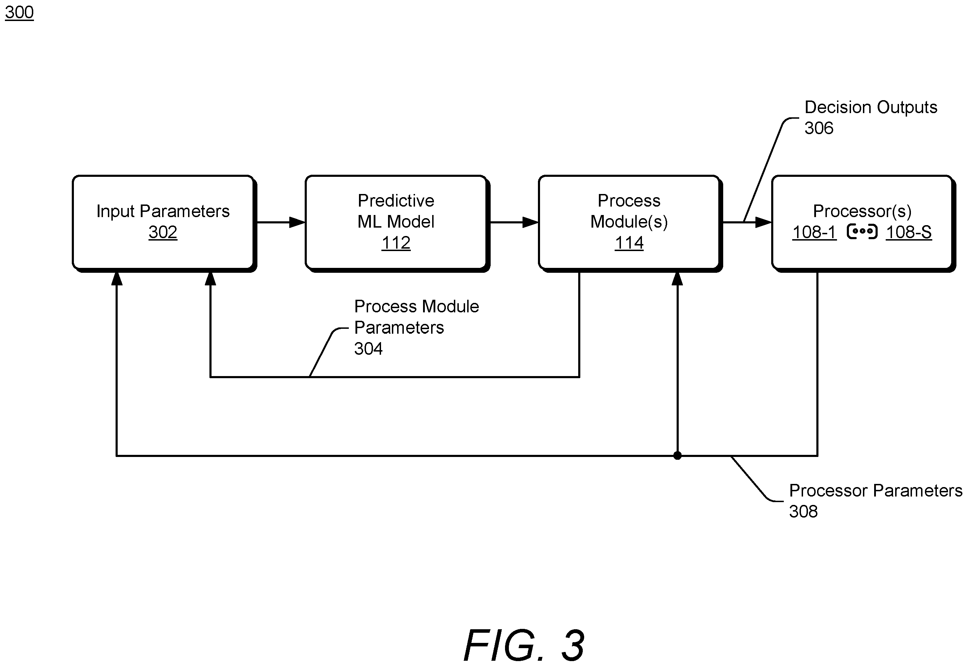

The computing device 102 can additionally include a network interface 206 for communicating data over wired, wireless, or optical networks. For example, the network interface 206 may communicate data over a local-area network (LAN), a wireless local-area network (WLAN), a personal-area network (PAN), a wide-area network (WAN), an intranet, the Internet, a peer-to-peer network, a point-to-point network, a mesh network, Bluetooth^{™}, and the like. The computing device 102 may also include a display 208. An example implementation of the ML-based prediction and dynamic core allocation architecture with respect to the predictive ML model 112 and the one or more process modules 114 is further described with respect to FIG. 3.

### Dynamic Control for a System-on-Chip

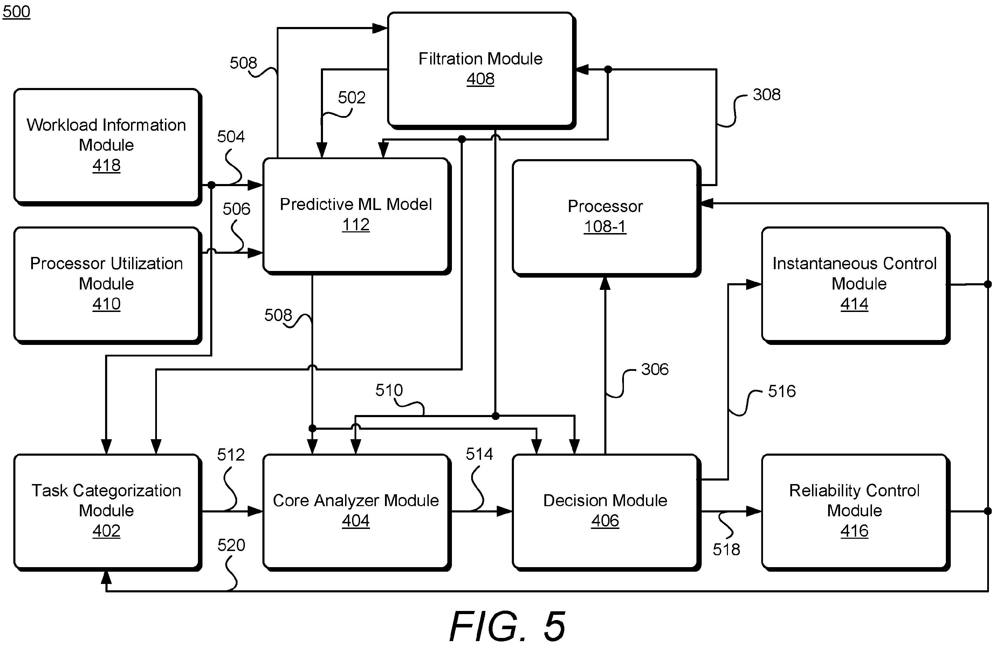

FIG. 3 illustrates an example implementation 300 of an ML-based prediction and dynamic core allocation architecture. In summary, the predictive ML model 112 receives input parameters 302 related to the one or more processors 108-1 to 108-S. An output from the predictive ML model 112 is received by the one or more process modules 114. In some examples, the one or more process modules 114 can inform or provide the input parameters 302 via process module parameters 304. The one or more process modules 114 also, in aspects, provide decision outputs 306 for the one or more processors 108. The one or more processors 108 inform the input parameters 302 and the one or more process modules 114 via processor parameters 308. Further details of the interaction between the one or more process modules 114 are described with respect to FIG. 5.

In some examples, the input parameters 302 are the processor parameters 308. For example, the processor parameters 308 can be a heat output, a performance metric, an operation frequency, a workload, etc. In examples where a computing device (e.g., the computing device 102 of FIG. 1) has multiple processors, each of the one or more processors 108 can provide its own processor parameters 308. In some examples, at least one of the one or more processors 108 is a multi-core processor. In such examples, the processor parameters 308 can include parameters at a core-level of granularity (core-by-core usage, temperature, performance, frequency, voltage, etc.).

In aspects, the implementation 300 can be the predictive ML model 112 predicting feedback signals associated with various control loops, with the control loops pertaining to the one or more processors 108. For example, consider a thermal control loop for the one or more processors 108. The input parameters 302 can be processor and/or core temperature relating to the one or more processors 108. The predictive ML model 112 can predict future temperatures for the one or more processors 108. The process modules 114 can leverage the future temperature predictions from the predictive ML model 112 to modify a behavior of the one or more processors to balance various aspects of the one or more processors 108, such as temperature and performance.

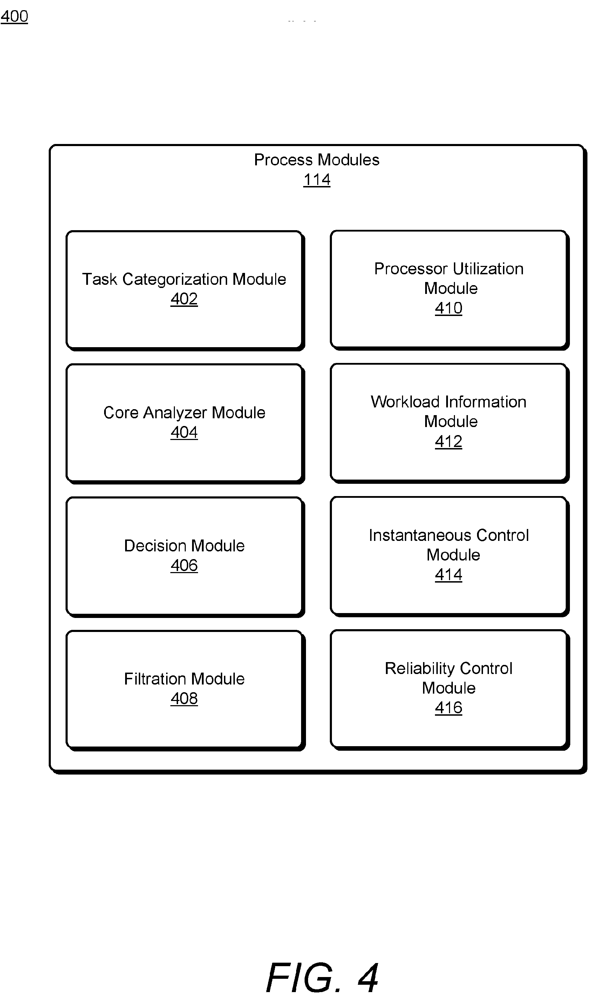

Consider, for example, a user (e.g., the user 104 of FIG. 1) using the computing device to play a video game. The video game, in this example, is a high-performance game utilizing a high relative amount of processor resources. The one or more process modules 114 may determine that parameters relating to performance and heat are the most relevant of the processor parameters 308. The one or more processors 108 can, in this example, output the processor parameters 308 of heat, utilization, and frequency for each of several cores in the one or more processors 108. The predictive ML model 112 can, for example, predict that the processor 108-1 will have a ramping heat and that the processor 108-2 will not have a ramping heat. The one or more process modules 114 may determine to switch tasks from the processor 108-1 to the processor 108-2 based on this prediction. Types of the one or more process modules 114 are further described with respect to FIG. 4.

FIG. 4 illustrates example process modules 114 for an ML-based prediction and dynamic core allocation architecture. A task categorization module 402 can, in some examples, analyze current workload/task running on an SoC (e.g., the SoC 106 of FIG. 1) and provides insights to a core analyzer module 404. In aspects, the task categorization module 402 classifies one or more underlying tasks as background or critical based on, for example, quality of service (QoS) requirements. For example, critical tasks can include tasks with strict performance, timing, or QoS requirements and may include real-time computations, user interaction, and/or high-priority system functions with latency-sensitive targets, which cannot tolerate any delays or interruptions and directly impact the user experience or system stability. For example, background tasks can include tasks that are non-urgent and/or less sensitive to changes in latency, performance, etc. Examples of background tasks include system maintenance, offline computations, batch processing tasks that can be deferred or paused without noticeable negative user experience impact, etc. In some examples, the task categorization module 402 utilizes workload information, current resource constraints, and/or current performance states of the SoC to obtain a recommendation to the core analyzer module 404 in the form of task category along with its scheduling priority and its runtime constraints.

The core analyzer module 404, in some examples, recommends actions relating to one or more processor cores of the one or more processors 108 of FIG. 1 to a decision module 406. For example, the core analyzer module 404 can recommend task switching from a first one or more cores to a second one or more cores. In aspects, the one or more first cores are different than the one or more second cores, and both the one or more first cores and one or more second cores may be part of a same processor of the one or more processors 108 or of different processors of the one or more processors 108. In some examples, the core analyzer module 404 considers both SoC temperature and performance in its recommended actions. For example, the core analyzer module 404 can utilize a dynamic SoC load balancing algorithm, which analyzes workloads and cores utilization via appropriate predictive models to preemptively suggest task migration. The core analyzer module 404, in some examples, recommends switching higher-priority tasks to the cores of the one or more processors 108 that are capable of higher performance, while lower-priority tasks are suggested to be switched to more energy-efficient cores of the one or more processors 108.

The core analyzer module 404, in some examples, uses core temperature sensors of the cores of the one or more processors 108 to continuously monitor core temperature. This monitoring may compare the cores of the one or more processors 108 against corresponding temperature limits dictated by, for example, a thermal policy. In such examples, the core analyzer module 404 can specify the corresponding thermal headroom, which specifies a core temperature margin to avoid hitting temperature throttling limits (e.g., to avoid damage to one or more of the one or more processors 108, to avoid overheating the computing device 102 of FIG. 1, to avoid excess heat experienced by the user 104 of FIG. 1, etc.). The core analyzer module 404, in some examples, ranks the cores in decreasing order of thermal headroom. In examples where there are multiple throttling levels in increasing mitigation severity, the core analyzer module 404 may utilize a weighted ranking mechanism for the cores and recommend assigning tasks to cores with higher thermal headroom for SoC sustained/reliable performance.

The core analyzer 404 may further provide optimization suggestions as recommended actions to the decision module 406. The optimization suggestions may include keeping one or more of the cores of the one or more processors 108 in a reserve state for unexpected high-priority tasks. For example, a first core of the one or more processors 108 can be under a workload but not outputting a predicted heat (e.g., a future heat prediction from the predictive ML model 112 of FIG. 1) that encroaches on a thermal headroom of the core, while a second core of the one or more processors 108 can have no workload. The core analyzer module 404 can, in this example, recommend to the decision module 406 that the second core be kept in an idle state to keep the second core ready for any high-priority tasks that may transpire.

The decision module 406, in some examples, takes a prediction from the predictive ML model 112, along with the recommended actions from the core analyzer module 404, and generates one or more mitigation actions. In some examples, the prediction can be a prediction data. In some examples, the prediction can be in a time series format. For example, consider the prediction as a temperature prediction for at least one core of the one or more processors 108. The temperature prediction, in this example, can be in the time series format, which indicates a timeline in which temperature will reach a predicted level. The timeline, for example, can be utilized to manipulate the thermal policy. For example, the thermal policy can be different for a junction temperature predicted to reach 100 degrees Celsius (°C) in 10 seconds than if the junction temperature is predicted to reach 100 °C in 2 seconds. In some examples, an input to the predictive ML model 112 can also be in the time series format.

The decision module 406 can, in some examples, enforce a variety of throttling techniques on the cores of the one or more processors 108, including running current mitigations at a new cadence, deploying updated gains for thermal control loops, adjusting thermal control loop targets, and/or enabling/disabling more severe throttling mechanisms. For example, the core analyzer module 404 can specify a core or processor thermal headroom to the decision module 406. The decision module 406 may increase instantaneous loop targets for critical tasks based on the thermal headroom.

A filtration module 408 may filter one or more aspects relating to the ML-based prediction and dynamic core allocation architecture. For example, consider the processor parameters 308 of FIG. 3. The filtration module 408 may receive the processor parameters 308 and provide a filtered output. In an example where the processor parameters 308 include a temperature, the filtration module 408 can filter the temperature and provide a filtered temperature as the input parameters 302 of FIG. 3 to the predictive ML model 112. In some examples, the filtered temperature can be in the form of filtered temperature data, a filtered temperature signal, etc. In some examples, the prediction from the predictive ML model 112 can be filtered by the filtration module 408 to generate a filtered prediction. In some examples, the filtered prediction can be received by at least one of the one or more process modules 114 instead of or in addition to the prediction and/or the processor parameters 308. Any suitable filtering may be used, such as applying a low-pass filter, a high-pass filter, a band-pass filter, a band-stop filter, an all-pass filter, passive/active filters, etc.

A processor utilization module 410, in aspects, considers the use of the one or more processors 108. For example, one or more tasks can be assigned to one or more cores of the one or more processors 108, and the processor utilization module 410 can parse the task assignments. The processor utilization module 410 can, in some examples, include information pertaining to usage characteristics of the one or more processors 108. In aspects, the processor utilization module 410 provides a processor-related input to the predictive ML model 112. For example, the processor utilization module 410 can provide a processing schedule, a processor usage policy, or similar information to the predictive ML model 112.

A workload information module 412 can provide information on a workload of one or more of the one or more processors 108 to the predictive ML model 112 or to other process modules 114. For example, the workload information module 412 can provide a usage percentage of one or more of the cores of the one or more processors 108 to the predictive ML model 112 as a partial input. The predictive ML model 112 may take information from the workload information module 412 into account when predicting, for example, a temperature of the one or more of the cores. For example, a low-workload core may have a lower predicted future temperature than a higher-workload core operating at the same frequency and voltage.

The one or more process modules 114 can, in some examples, also include an instantaneous control module 414 and a reliability control module 416. As discussed, the decision module 406 can, for example, increase instantaneous loop targets for critical tasks based on the thermal headroom. The instantaneous loop targets may be part of the instantaneous control module 414. The instantaneous control module 414, in aspects, receives instantaneous control parameters and outputs an instantaneous performance state. In aspects, the instantaneous control parameters include information based on instantaneous properties of the SoC, such as a temperature of a core or filtered temperature of a core.

In another example, a reliability temperature control loop target may be decreased, for example by the decision module 406, if a temperature spike has been predicted. This and similar parameters are, in aspects, reliability control parameters and are used as inputs for the reliability control module 416. The reliability control module 416, in aspects, outputs a reliability performance state.

In some examples, it is preferable for the one or more processors 108 to have behaviors determined by the instantaneous performance state and, in other examples, it is preferable for the behaviors of the one or more processors 108 to be determined by the reliability performance state. For example, a spike in temperature may cause an associated prediction of the predictive ML model 112 indicating a possible damage to the one or more processors 108 if left unchecked. In aspects, the reliability performance state and the instantaneous performance state can be combined to give a processor performance state to the one or more processors 108. In some examples, the combining is simply a minimum of the instantaneous performance state and the reliability performance state. In other examples, a weighted sum or other combination algorithm can be used.

FIG. 5 illustrates an example implementation 500 of an ML-based prediction and dynamic core allocation architecture. The one or more processors 108 send one or more processor parameters 308. The one or more processor parameters 308 may include temperature measurements or estimations, processor or core workload, performance characteristics, idle times, scheduling, etc. The one or more processor parameters 308 are received by the filtration module 408. The filtration module 408, in aspects, filters the one or more processor parameters 308 and sends a filtered output 502.

The filtered output 502 is received by the predictive ML model 112. The predictive ML model 112 uses an ML input including the one or more processor parameters 308. In some examples, the workload information module 418 sends a workload output 504 to the predictive ML model 112. In some examples, the processor utilization module 410 sends a utilization output 506 to the predictive ML model 112. The ML input, in some examples, includes the workload output 504 and the utilization output 506. The predictive ML model 112 generates an ML output 508 based on the ML input. In aspects, the ML output 508 is a prediction of future processor parameters.

In some examples, the ML output 508 is received by the filtration module 408. The ML output 508 may be filtered by the filtration module 408 to generate a filtered prediction output 510. In some examples, the core analyzer module 404 receives the filtered prediction output 510 as a core input. In some examples, the core analyzer module 404 receives the ML output 508 as the core input. In some examples, the decision module 406 receives the filtered prediction output 510 as a decision input. In some examples, the decision module 406 receives the ML output 508 as the decision input.

The core analyzer module 404 parses the core input, which may additionally include a task output 512 from the task categorization module 402, and generates a core output 514. In aspects, the core output 514 recommends actions relating to one or more processor cores of the one or more processors 108. The core output 514 is received by the decision module 406 and is used as part of the decision input. The decision module 406 generates, based on the decision input, the decision outputs 306, instantaneous control parameters 516, and reliability control parameters 518.

In aspects, the decision outputs 306 direct the one or more processors 108 to modify one or more operating conditions. The one or more operating conditions may include an operating frequency of one or more cores of the one or more processors 108, a power state of one or more of the cores of the one or more processors 108, a performance state of one or more of the cores of the one or more processors 108, a memory usage of one or more of the cores of the one or more processors 108, and/or a scheduling time for one or more of the one or more processors 108. The decision outputs 306 may be configured as instructions to the one or more processors 108, including a machine language formulation.

The instantaneous control module 414 receives the instantaneous control parameters 516 and the reliability control module 416 receives the reliability control parameters 518. The instantaneous control module 414 generates an instantaneous performance state based on the instantaneous control parameters 516. The reliability control module 416 generates a reliability performance state. As outlined in this disclosure, the instantaneous performance state and the reliability performance state are combined to generate a processor performance state output 520. In some examples, the processor performance state output 520 is received by the one or more processors 108 and is used, along with the decision outputs 306, to alter the one or more operating conditions.

The task categorization module 402 may receive the processor performance state output 520, the one or more processor parameters 308, and/or the workload output 504. The task categorization module 402 can, for example, generate the task output 512 based on the received processor performance state output 520, the one or more processor parameters 308, and/or the workload output 504. In some examples, the task output 512 is used at least in part as the core input.

### Machine Learning

An ML model, as discussed in this disclosure, refers to a computer model that has been trained using one or more machine-learning techniques. In general, this training may be done by providing training inputs to one or more training models, which in turn may provide an output. The output may be in the form of a prediction, a confidence score, or another probability-based output.

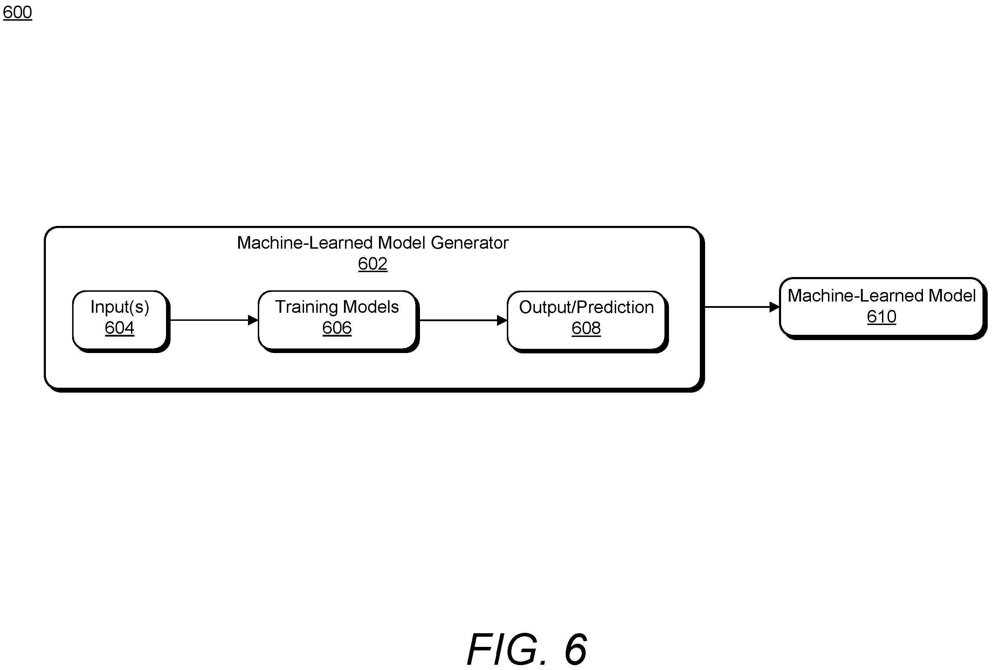

FIG. 6 illustrates an example of machine-learning 600, as outlined in this disclosure. An ML model generator 602 may include training elements in the form of inputs 604, training models 606, and outputs 608 and may be used to generate an ML model 610 (e.g., the predictive ML model 112 of FIG. 1). The inputs 604 may be training data. The training data 604 may be processed by the training models 606. Examples of the training models 606 include multi-layer perceptron (MLP) models, convolutional neural networks (CNN), long short-term memory (LSTM) algorithms, generative adversarial networks (GAN), K means clustering, Gaussian mixture models (GMM), or any other of a number of machine learning training techniques known to a person of ordinary skill in the art. The training models 606 may include a single type of model or multiple types, as well as various combinations of types including combinations of single types and of multiple types.

The training models 606 may use supervised learning methods, where the training data 604 may be labeled and the outputs 608 may be graded based on their fidelity to a "truth" output. The training models 606 may use an unsupervised learning method, where there may not be labels on the training data 604 and the training models 606 may classify correlations without reference to a "truth" value. The training models 606 may combine supervised and unsupervised techniques.

The input 604 may be related to processor outputs (e.g., the processor parameters 308 of FIG. 3). For example, the input 604 may be temperature measurements for one or more processors or one or more processor cores (e.g., the one or more processors 108 of FIG. 1), processor or core workload, performance characteristics, idle times, scheduling, or other or a combination of these input types. The input 604 may also be from training data used to generate the ML model 610. The training data may comprise data of any of the input types sorts described above, created for the purpose of training the ML model 610. The ML model 610 may be generated once the training of the ML model generator 602 is complete. The ML model 610 may be trained on a same device where the ML model 610 is stored or on at least one other device.

The ML model 610 may be updated with additional training after it has been initially trained. In aspects, the ML model 610 may have the same structure before and after training but may have one or more different values, such as starting vs. final values for weights and biases. In some examples, the ML model 610 may start with a different architecture prior to training, and in this way the generated ML model 610 may have architecture that is a product of the training done in the ML model generator 602.

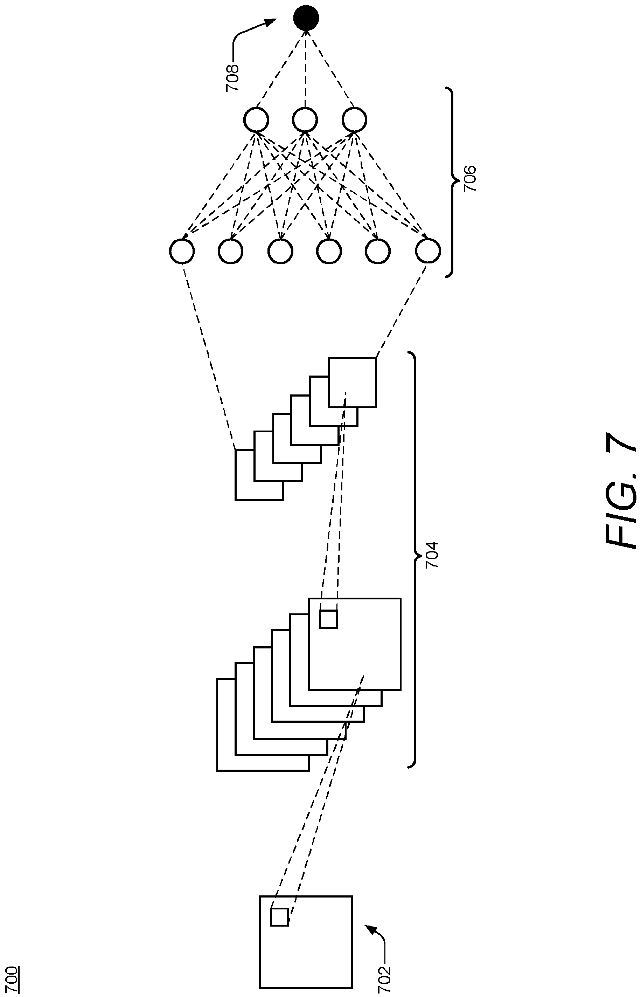

FIG. 7 illustrates an example machine-learned architecture 700 for an ML-based prediction and dynamic core allocation architecture. FIG. 7 is not meant to be limiting but to show one possible example out of many, which a person skilled in the art may be able to employ. The ML architecture 700 may have inputs 702. The inputs 702 may be related to processor outputs (e.g., the processor parameters 308 of FIG. 3). For example, the inputs 702 may be temperature measurements for one or more processors or one or more processor cores (e.g., the one or more processors 108 of FIG. 1), processor or core workload, performance characteristics, idle times, scheduling, or other or a combination of these input types. In this example, the inputs 702 are first processed by a CNN 704. The CNN 704 may extract features from the inputs 702. For example, extracted features may contain elements such as motion detection, object recognition, person recognition, other elements and features common to video and image processing and identification, processor parameter-related correlations, or other correlations.

The CNN 704 may be a disconnected neural network, meaning all members of the neural network, such as perceptrons, may not be in a causal relationship with one another. It should be mentioned that other feature extraction techniques besides CNNs may be equally employed in lieu of the CNN 704. An MLP 706 neural network may receive the extracted feature outputs from the CNN 704 as inputs. The MLP 706 may be a fully connected network, which may comprise all perceptrons in a causal relationship with one another. The MLP 706 may have as an output a detection probability in the form of a prediction 708. The prediction 708 may be, for example, the ML output 508 of FIG. 5.

An ML model (e.g., the predictive ML model 112 of FIG. 1) trained by a trainer such as the ML architecture 700 may exhibit similar architecture. For example, suppose the ML architecture 700 uses a matrix containing the processor parameters 308, the workload output 504 of FIG. 5, and the utilization output 506 of FIG. 5 as the inputs 702 and provides a prediction of future processor parameters (e.g., the ML output 508) represented as numbers between 0 and 1 as the prediction 708. The ML model trained by the ML architecture 700 may take a matrix of input data as described in the example above as its input and output a probability vector with elements between 0 and 1 indicating the probability of the future processor parameters. The ML model may have one or more feature extraction layers, such as the CNN 704, and one or more fully connected layers, such as the MLP 706.

In aspects, feature extraction, such as that done by the feature extraction layers of the CNN 704, may be accomplished by correlating areas of the inputs 702. Such correlations may, for example, be established using a disconnected network, the disconnected network not having all neurons causally connected by necessity. The feature extraction layers may, in aspects, utilize windows of analysis within the inputs 702, the windows of analysis in some examples overlapping one another. The feature extraction layers may, in aspects, be a product of unsupervised learning. In some examples, the feature extraction is an intermediate ML output.

Though FIG. 7 depicts the ML architecture 700 as incorporating both feature extraction, such as from the CNN 704 portion, and selection and/or interpolation, such as from the MLP 706 portion, these ML models may be distinct. For example, there may be a trained generation model corresponding to the CNN 704, a trained selection model corresponding to at least a portion of the MLP 706, and a trained interpolation model corresponding to at least a portion of the MLP 706. Some or all of these ML models may be combined, or other ML models, including types not shown in FIG. 7.

It will be understood by a person of ordinary skill in the art that the aforementioned are merely examples of the types of machine-learning training that may be used to produce an ML model for any aspect of an ML-based prediction and dynamic core allocation architecture. Other combinations and techniques may be employed, which do not alter the scope of the inventive concept of an ML-based prediction and dynamic core allocation architecture. Examples such as employing a CNN, use of the processor parameters 308 as inputs, including a fully connected portion of the machine learning training, etc. are not meant to be limiting but to serve as examples of how an ML model for generating predictions of future processor parameters may be accomplished.

### Example Methods

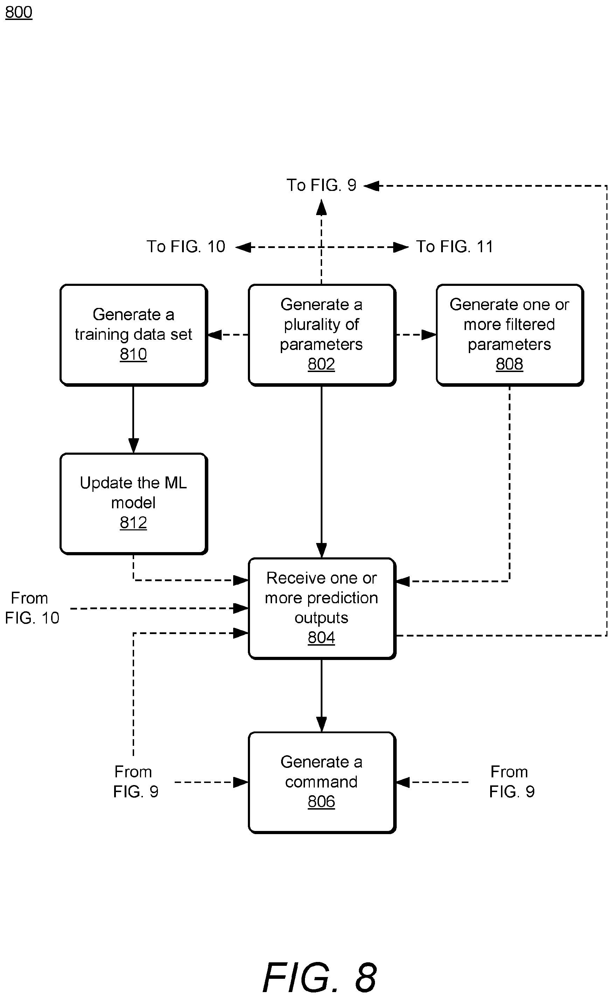

FIGS. 8-11 depict example methods 800-1100 for implementing aspects of an ML-based prediction and dynamic core allocation architecture. Methods 800-1100 are shown as a set of operations (or acts) performed but not necessarily limited to the order or combinations in which the operations are shown herein. Further, any of one or more of the operations may be repeated, combined, reorganized, or linked to provide a wide array of additional and/or alternate methods. In portions of the following discussion, reference may be made to the environment 100 of FIG. 1 and entities detailed in FIGS. 1-7, reference to which is made for example only. The techniques are not limited to performance by one entity or multiple entities operating on one device.

At 802 in FIG. 8, a plurality of parameters (e.g., the processor parameters 308 of FIG. 3, the operation parameter subsets 110 of FIG. 1) related to one or more operating conditions of one or more processors (e.g., the one or more processors 108 of FIG. 1) are generated. According to some examples, the one or more processors include one or more cores. The one or more conditions of the one or more processors, in some examples, include at least one of a temperature of at least one of the one or more processors, a frequency of at least one of the one or more processors, a power output of at least one of the one or more processors, an operating frequency of one or more cores of the one or more processors, a power state of one or more of the cores of the one or more processors, a performance state of one or more of the cores of the one or more processors, a memory usage of one or more of the cores of the one or more processors, and/or a scheduling time for one or more of the one or more processors. In some examples, the temperature includes a plurality of temperatures in a time series format. In some examples, the one or more processors include one or more of a central processing unit (CPU), a graphics processing unit (GPU), a tensor processing unit (TPU), a neural processing unit (NPU), an associative processing unit (APU), a field-programmable gate array (FPGA), or a visual processing unit (VPU).

At 804, one or more prediction outputs (e.g., the ML output 508 of FIG. 5) are received from an ML model (e.g., the predictive ML model 112 of FIG. 1). The ML model is configured to use an ML input (e.g., the input parameters 302 of FIG. 3, the filtered output 502 of FIG. 5, the processor parameters 308), the ML input based on the processor parameters and the one or more prediction outputs based on the ML input. According to some examples, the one or more prediction outputs include a prediction temperature for at least one of the one or more processors. In some examples, the prediction temperature is for a future time. In some examples, the prediction temperature is in a time series format, including a plurality of predicted temperatures. In some examples, the ML model is trained (e.g., by the ML model generator 602 of FIG. 6, by the ML architecture 700) on data related to the one or more operating conditions of the one or more processors.

At 806, a command (e.g., the decision outputs 306 of FIG. 3) is generated. The command, in aspects, is based on the one or more prediction outputs. In aspects, the command is generated by one or more process modules (e.g., the one or more process modules 114 of FIG. 1). The command, in aspects, is configured to change one or more of the one or more operating conditions of the one or more processors. The one or more process modules include at least one of a task categorization module (e.g., the task categorization module 402 of FIG. 4), a core analyzer module (e.g., the core analyzer module 404 of FIG. 4), a decision module (e.g., the decision module 406 of FIG. 4), a filtration module (e.g., the filtration module 408 of FIG. 4), a processor utilization module (e.g., the processor utilization module 410 of FIG. 4), a workload information module (e.g., the workload information module 412 of FIG. 4), an instantaneous control module (e.g., the instantaneous control module 414 of FIG. 4), and/or a reliability control module (e.g., the reliability control module 416 of FIG. 4). According to some examples, the command includes switching one or more tasks from a first core of the one or more cores of the one or more processors to a second core, the second core different than the first core.

At 808, one or more filtered parameters (e.g., the filtered output 502 of FIG. 5) are generated. In aspects, the one or more filtered parameters are generated by the filtration module. In some examples, the ML input further includes the one or more filtered parameters.

At 810, a training data set (e.g., the inputs 604 of FIG. 6, the inputs 702 of FIG. 7) is generated. In aspects, the training data set is based on the one or more operating conditions of the one or more processors. At 812, the ML model is updated using the training data set. In some examples, the ML model is updated on a computing device (e.g., the computing device 102 of FIG. 1). In some examples, the ML model is updated remotely from the computing device.

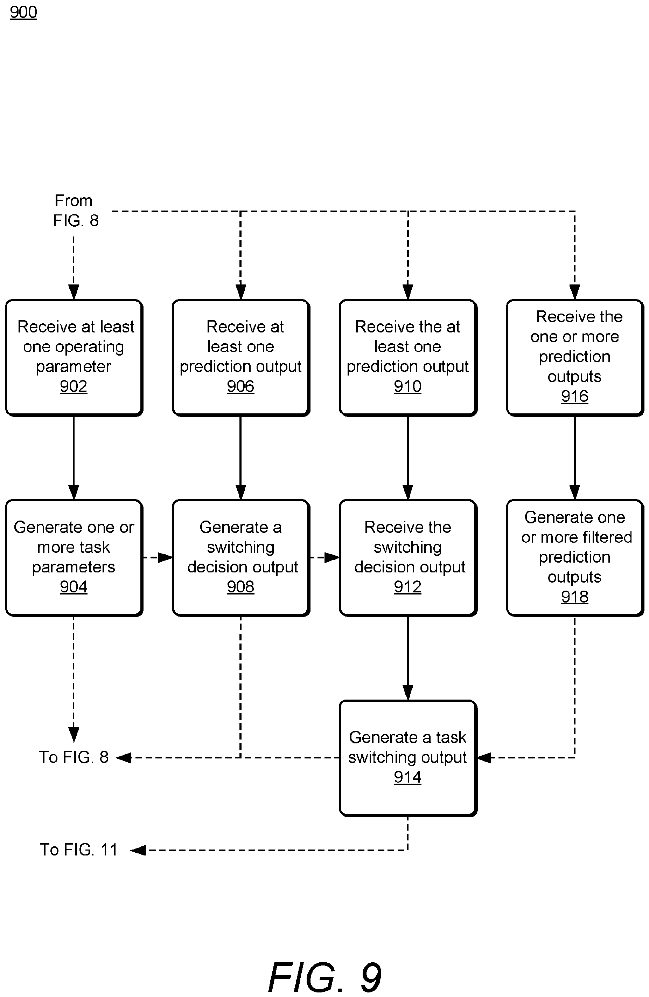

At 902 in FIG. 9, at least one operating parameter of the plurality of parameters is received by the task categorization module. At 904, one or more task parameters (e.g., the task output 512 of FIG. 5) are generated by the task categorization module based on the at least one operating parameter. In some examples, the one or more task parameters include one or more of a task category, a scheduled priority, and/or one or more run-time constraints. In some examples, the command is further based on the one or more task parameters.

At 906, at least one of the one or more prediction outputs is received by the core analyzer module. At 908, a switching decision output (e.g., the core output 514 of FIG. 5) is generated by the core analyzer module. In some examples, the switching decision output is further based on the one or more task parameters. In some examples, the command is further based on the switching decision output.

At 910, the at least one prediction output of the one or more prediction outputs is received by the decision module. At 912, the switching decision output is received by the decision module. At 914, a task switching output is generated based on the at least one prediction output. In some examples, the task switching output is further based on the switching decision output. In some examples, the command is further based on the task switching output.

At 916, the one or more prediction outputs are received by the filtration module. At 918, one or more filtered prediction outputs (e.g., the filtered prediction output 510 of FIG. 5) are generated. The generation of the one or more filtered prediction outputs is based on a filtration of the one or more prediction outputs. In some examples, the task switching output is based on the one or more filtered prediction outputs.

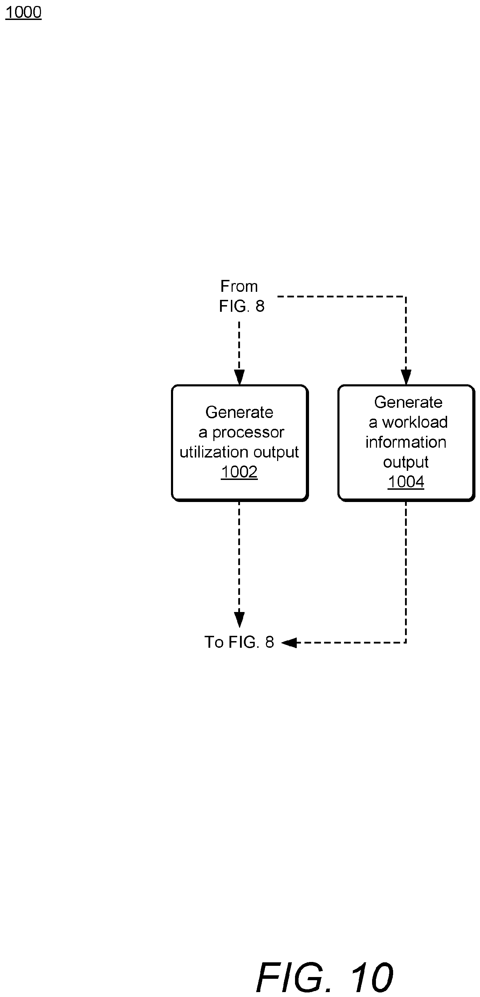

At 1002 in FIG. 10, a processor utilization output (e.g., the utilization output 506 of FIG. 5) is generated by the process utilization module. In aspects, the processor utilization output is based on a scheduling of one or more cores of the one or more processors. In some examples, the ML input is further based on the processor utilization output.

At 1004, a workload information output (e.g., the workload output 504 of FIG. 5) is generated by the workload information module. In aspects, the workload information output is based on a workload of one or more of the one or more cores. In some examples, the ML input is further based on the workload information output.

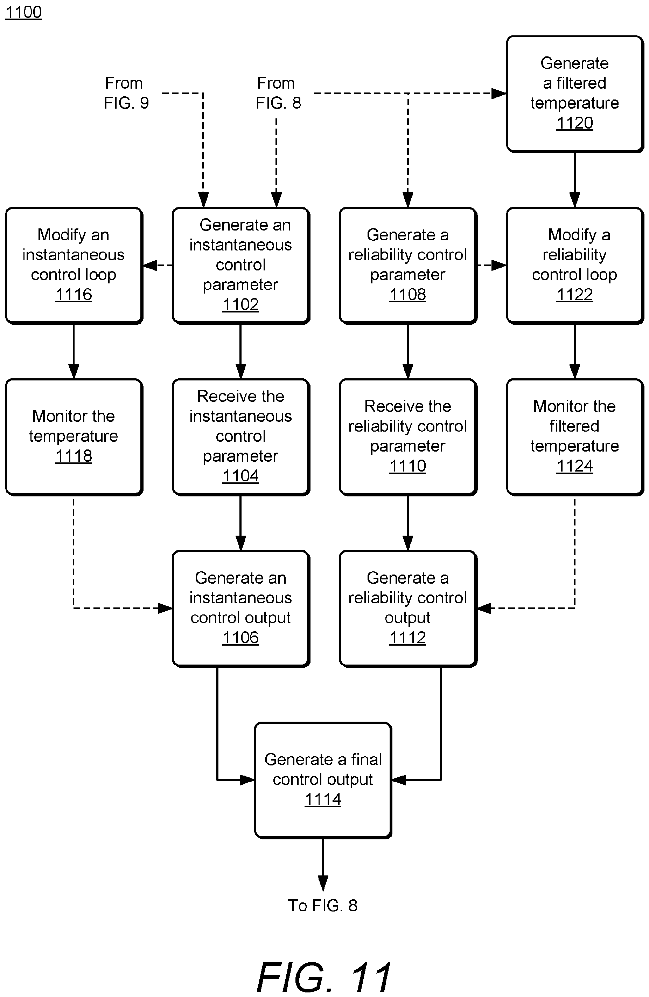

At 1102 in FIG. 11, an instantaneous control parameter (e.g., the instantaneous control parameters 516 of FIG. 5) is generated by the decision module. The generation of the instantaneous control parameter, in some examples, is based on the at least one prediction output, the switching decision output, or both. At 1104, the instantaneous control parameter is received by the instantaneous control module. At 1106, an instantaneous control output is generated by the instantaneous control module. In aspects, the instantaneous control output is configured to change a performance state of at least one core or at least one processor of the one or more processors.

At 1108, a reliability control parameter (e.g., the reliability control parameters 518 of FIG. 5) is generated by the decision module. The generation of the reliability control parameter, in some examples, is based on the at least one prediction output, the switching decision output, or both. At 1110, the reliability control parameter is received by the reliability control module. At 1112, a reliability control output is generated by the reliability control module. In aspects, the reliability control output is configured to change a performance state of at least one core or at least one processor of the one or more processors.

At 1114, a final control output (e.g., the processor performance state output 520 of FIG. 5) is generated. The final control output, in aspects, is based on the instantaneous control output and the reliability control output. In some examples, the command is further based on the final control output.

At 1116, an instantaneous control loop is modified by the instantaneous control module. The modification of the instantaneous control loop is based on a temperature of at least one of the one or more processors. The modification of the instantaneous control loop is further based on the instantaneous control parameter. At 1118, the temperature is monitored by the instantaneous control module. In aspects, the monitoring of the temperature is based on the instantaneous control loop. In some examples, the instantaneous control output is further based on the instantaneous control loop.

At 1120, a filtered temperature (e.g., the filtered output 502 of FIG. 5) is generated by the filtration module. The generation of the filtered temperature, in aspects, is based on the temperature. At 1122, a reliability control loop is modified by the reliability control module. The modification of the reliability control loop is based on the filtered temperature. The modification of the reliability control loop is further based on the reliability control parameter. At 1124, the filtered temperature is monitored by the reliability control module. In aspects, the monitoring of the filtered temperature is based on the reliability control loop. In some examples, the reliability control output is further based on the reliability control loop.

### Conclusion

Although techniques using, and apparatuses including, an ML-based prediction and dynamic core allocation architecture have been described in language specific to features and/or methods, it is to be understood that the subject of the appended claims is not necessarily limited to the specific features or methods described. Rather, the specific features and methods are disclosed as example implementations of an ML-based prediction and dynamic core allocation architecture.

### Additional Examples

Some additional Examples are described below.

Example 1: A method performed by a system-on-chip, where the method includes generating a plurality of parameters related to one or more operating conditions of one or more processors. The method further includes receiving one or more prediction outputs from a machine-leamed (ML) model. The ML model is configured to use an ML input, the ML input based on the plurality of parameters related to the one or more operating conditions of the one or more processors and, optionally, the one or more prediction outputs based on the ML input. The ML model is trained on data related to the one or more operating conditions of the one or more processors. The method further includes generating, by one or more process modules and based on the one or more prediction outputs, a command for the one or more processors, the command configured to change one or more of the one or more operating conditions of the one or more processors. For example, the ML input may comprise the plurality of parameters related to the one or more operating conditions of the one or more processors, and/or one or more previous outputs by the ML model. To note, the ML inputs may not be from an ML model but may be non-ML-based inputs used for the ML model.

Example 2: The method of example 1, where the one or more operating conditions of the one or more processors include a temperature, a power output, or a frequency.

Example 3: The method of any one of the previous examples, further including generating, with a filtration module and based on one or more of the plurality of parameters related to the one or more operating conditions of the one or more processors, one or more filtered parameters, the ML input further based on the one or more filtered parameters.

Example 4: The method of any one of the previous examples, where the one or more processors each include one or more cores and the one or more operating conditions of the one or more processors include at least one of an operating frequency of one or more cores of the one or more processors, a power state of one or more of the cores of the one or more processors, a performance state of one or more of the cores of the one or more processors, a memory usage of one or more of the cores of the one or more processors, or a scheduling time for one or more of the one or more processors.

Example 5: The method of any one of the previous examples, where the one or more processors include one or more of a central processing unit (CPU), a graphics processing unit (GPU), a tensor processing unit (TPU), a neural processing unit (NPU), an associative processing unit (APU), a field-programmable gate array (FPGA), or a visual processing unit (VPU).

Example 6: The method of any one of the previous examples, where the one or more process modules include at least one of a task categorization module, a core analyzer module, a decision module, a filtration module, a processor utilization module, a workload and information module, an instantaneous control module, or a reliability control module.

Example 7: The method of example 6, where the one or more process modules include the task categorization module and a first module of the one or more process modules. The method further includes receiving, by the task categorization module, at least one operating parameter of the plurality of parameters related to the one or more operating conditions of the one or more processors. The method further includes generating, by the task categorization module and based on the at least one operating parameter, one or more task parameters, the command for the one or more processors further based on the one or more task parameters.

Example 8: The method of example 7, where the first module includes the core analyzer module. The method further includes receiving, by the core analyzer module, at least one prediction output of the one or more prediction outputs and generating, by the core analyzer module and based on the at least one prediction output and the one or more task parameters, a switching decision output. The command for the one or more processors is further based on the switching decision output.

Example 9: The method of example 8, where the one or more process modules further include the decision module. The method further includes receiving, by the decision module, the at least one prediction output of the one or more prediction outputs. The method further includes receiving, by the decision module, the switching decision output and generating, by the decision module and based on the at least one prediction output and the switching decision output, a task switching output. The command for the one or more processors is further based on the task switching output.

Example 10: The method of any one of examples 6-9, where the one or more task parameters include one or more of a task category, a scheduled priority, or one or more run-time constraints.

Example 11: The method of example 9 or 10, where the one or more process modules further include the filtration module and the decision module. The method further includes receiving, by the filtration module, at least one of the plurality of parameters related to the one or more operating conditions of the one or more processors. The method further includes generating, by the filtration module, one or more filtered parameters based on a filtering of the at least one of the plurality of parameters. The ML input is further based on the one or more filtered parameters.

Example 12: The method of example 11, further including receiving, by the filtration module, the one or more prediction outputs and generating, by the filtration module, one or more filtered prediction outputs based on the one or more prediction outputs. The generation of the task switching output is further based on the one or more filtered prediction outputs.

Example 13: The method of any one of examples 6-12, where the one or more processors each include one or more cores, the plurality of parameters related to the one or more operating conditions of the one or more processors include a scheduling of one or more of the one or more cores, and the one or more process modules include the processor utilization module. The method further includes generating, by the processor utilization module, a processor utilization output, the processor utilization output based on the scheduling of one or more of the one or more cores. The ML input is further based on the processor utilization output.

Example 14: The method of any one of examples 6-13, where the one or more processors each include one or more cores, the plurality of parameters related to the one or more operating conditions of the one or more processors include a workload of one or more of the one or more cores, and the one or more process modules further include the workload and information module. The method further includes generating, by the workload and information module, a workload information output. The workload information output is based on the workload of one or more of the one or more cores, and the ML input is further based on the workload information output.

Example 15: The method of any one of examples 9-14, where the one or more process modules further include the instantaneous control module and the reliability control module. The method further includes generating, by the decision module and based on the at least one prediction output and the switching decision output, an instantaneous control parameter. The method further includes receiving, by the instantaneous control module, the instantaneous control parameter. The method further includes generating, by the instantaneous control module and based on the instantaneous control parameter, an instantaneous control output configured to change a performance state of at least one of the one or more processors. The method further includes generating, by the decision module and based on the at least one prediction output and the switching decision output, a reliability control parameter. The method further includes receiving, by the reliability control module, the reliability control parameter. The method further includes generating, by the reliability control module and based on the reliability control parameter, a reliability control output configured to change the performance state of at least one of the one or more processors. The method further includes generating, based on the instantaneous control output and the reliability control output, a final control output. The command for the one or more processors is further based on the final control output.

Example 16: The method of example 15, where the one or more operating conditions of the one or more processors include a temperature of at least one of the one or more processors and the one or more process modules further include the filtration module. The method further includes modifying, by the instantaneous control module and based on the instantaneous control parameter, an instantaneous control loop. The method further includes monitoring, by the instantaneous control module, the temperature with the instantaneous control loop. The instantaneous control output is further based on the instantaneous control loop. The method further includes generating, with the filtration module, a filtered temperature based on the temperature. The method further includes modifying, by the reliability control module and based on the reliability control parameter, a reliability control loop. The method further includes monitoring, by the reliability control module, the filtered temperature with the reliability control loop. The reliability control output is further based on the reliability control loop.

Example 17: The method of any preceding example, further including generating, based on the one or more operating conditions of the one or more processors and the one or more prediction outputs, a training data set and updating the ML model using the training data set.

Example 18: The method of any preceding example, where the one or more operating conditions of the one or more processors include a temperature of at least one of the one or more processors at a first time. The one or more prediction outputs include a predicted temperature of the at least one of the one or more processors at a second time, the second time after the first time.

Example 19: The method of example 18, where the temperature includes a plurality of temperatures in a time series format and the predicted temperature includes a plurality of predicted temperatures in a time series format.

Example 20: The method of any preceding example, where the one or more processors each include one or more cores and the command for the one or more processors includes switching one or more tasks from a first core of the one or more cores to a second core of the one or more cores, the first core different than the second core.
Example 21: The method of any preceding example further comprising processing the ML input with the ML model to generate the one or more prediction outputs.

Example 22: A system-on-chip including one or more processors, one or more process modules, and a memory storing instructions that, when accessed by the one or more processors, cause the one or more processors to perform the method of any one of examples 1-21.

Example 23: A non-transitory, computer-readable medium that, when accessed by one or more processors, causes the one or more processors to perform the method of any one of examples 1-21.

Example 24: A computer programming product that, when accessed by one or more processors, causes the one or more processors to perform the method of any one of examples 1-21.

## Claims

1. A method performed by a system-on-chip, the method comprising:
generating a plurality of parameters related to one or more operating conditions of one or more processors;
receiving one or more prediction outputs from a machine-learned (ML) model, the ML model:
configured to use an ML input, the ML input based on the plurality of parameters related to the one or more operating conditions of the one or more processors and the one or more prediction outputs based on the ML input; and
trained on data related to the one or more operating conditions of the one or more processors; and
generating, by one or more process modules and based on the one or more prediction outputs, a command for the one or more processors, the command configured to change one or more of the one or more operating conditions of the one or more processors.

2. The method of claim 1, wherein the one or more operating conditions of the one or more processors comprise a temperature, a power output, or a frequency.

3. The method of claim 1, wherein:
the one or more operating conditions of the one or more processors comprise a temperature of at least one of the one or more processors at a first time; and
the one or more prediction outputs comprise a predicted temperature of the at least one of the one or more processors at a second time, the second time after the first time.

4. The method of any one of the previous claims, wherein the one or more processors comprise one or more of a central processing unit (CPU), a graphics processing unit (GPU), a tensor processing unit (TPU), a neural processing unit (NPU), an associative processing unit (APU), a field-programmable gate array (FPGA), or a visual processing unit (VPU).

5. The method of any one of the previous claims, wherein:
the one or more processors each comprise one or more cores; and
the one or more operating conditions of the one or more processors comprise at least one of:
an operating frequency of one or more cores of the one or more processors;
a power state of one or more of the cores of the one or more processors;
a performance state of one or more of the cores of the one or more processors;
a memory usage of one or more of the cores of the one or more processors; or
a scheduling time for one or more of the one or more processors.

6. The method of any one of the previous claims, wherein the one or more process modules comprise at least one of:
a task categorization module;
a core analyzer module;
a decision module;
a filtration module;
a processor utilization module;
a workload and information module;
an instantaneous control module; or
a reliability control module.

7. The method of claim 6, wherein the one or more process modules comprise the task categorization module and a first module of the one or more process modules, the method further comprising:
receiving, by the task categorization module, at least one operating parameter of the plurality of parameters related to the one or more operating conditions of the one or more processors; and
generating, by the task categorization module and based on the at least one operating parameter, one or more task parameters, the command for the one or more processors further based on the one or more task parameters.

8. The method of claim 7, wherein the first module comprises the core analyzer module, the method further comprising:
receiving, by the core analyzer module, at least one prediction output of the one or more prediction outputs; and
generating, by the core analyzer module and based on the at least one prediction output and the one or more task parameters, a switching decision output, the command for the one or more processors further based on the switching decision output.

9. The method of claim 8, wherein the one or more process modules further comprise the decision module, the method further comprising:
receiving, by the decision module, the at least one prediction output of the one or more prediction outputs;
receiving, by the decision module, the switching decision output; and
generating, by the decision module and based on the at least one prediction output and the switching decision output, a task switching output, the command for the one or more processors further based on the task switching output.

10. The method of claim 9, wherein the one or more process modules further comprise the filtration module and the decision module, the method further comprising:
receiving, by the filtration module, at least one of the plurality of parameters related to the one or more operating conditions of the one or more processors; and
generating, by the filtration module, one or more filtered parameters based on a filtering of the at least one of the plurality of parameters, the ML input further based on the one or more filtered parameters.

11. The method of claim 10, further comprising:
receiving, by the filtration module, the one or more prediction outputs; and
generating, by the filtration module, one or more filtered prediction outputs based on the one or more prediction outputs, the generation of the task switching output further based on the one or more filtered prediction outputs.

12. The method of claim 9, 10 or 11 wherein the one or more process modules further comprise the instantaneous control module and the reliability control module, the method further comprising:
generating, by the decision module and based on the at least one prediction output and the switching decision output, an instantaneous control parameter;
receiving, by the instantaneous control module, the instantaneous control parameter;
generating, by the instantaneous control module and based on the instantaneous control parameter, an instantaneous control output configured to change a performance state of at least one of the one or more processors;
generating, by the decision module and based on the at least one prediction output and the switching decision output, a reliability control parameter;
receiving, by the reliability control module, the reliability control parameter;
generating, by the reliability control module and based on the reliability control parameter, a reliability control output configured to change the performance state of at least one of the one or more processors; and
generating, based on the instantaneous control output and the reliability control output, a final control output, wherein the command for the one or more processors is further based on the final control output.

13. The method of claim 12, wherein the one or more operating conditions of the one or more processors comprise a temperature of at least one of the one or more processors and the one or more process modules further comprise the filtration module, the method further comprising:
modifying, by the instantaneous control module and based on the instantaneous control parameter, an instantaneous control loop;
monitoring, by the instantaneous control module, the temperature with the instantaneous control loop, wherein the instantaneous control output is further based on the instantaneous control loop;
generating, with the filtration module, a filtered temperature based on the temperature;
modifying, by the reliability control module and based on the reliability control parameter, a reliability control loop; and
monitoring, by the reliability control module, the filtered temperature with the reliability control loop, wherein the reliability control output is further based on the reliability control loop.

14. A system-on-chip comprising:
one or more processors;
one or more process modules; and
a memory storing instructions that, when accessed by the one or more processors, cause the one or more processors to perform the method of any one of claims 1-13.

15. A non-transitory, computer-readable medium that, when accessed by one or more processors, causes the one or more processors to perform the method of any one of claims 1-13.
